# EUROPÄISCHE PATENTSCHRIFT

(11) **EP 0 722 051 B1**
(45) Veröffentlichungstag und Bekanntmachung des Hinweises auf die Patenterteilung: **04.08.1999**
(21) Anmeldenummer: 95118936.4
(22) Anmeldetag: 01.12.1995
(51) Int. Cl.: F16D 65/42, F16D 55/40

(54) **Verfahren und Einrichtung zur Nachstellung einer, insbesondere in Öl laufenden, Lamellenbremse**
Method and arrangement for adjusting especially an oil-immersed multiple-disc brake
Procédé et dispositif d'ajustage pour un frein multidisques en particulier à huile

(30) Priorität: 13.01.1995 DE 19500765
(43) Veröffentlichungstag der Anmeldung: 17.07.1996
(73) Patentinhaber: O&K ORENSTEIN & KOPPEL AG, 13581 Berlin (DE)
(72) Erfinder: Langenbeck, Bernhard, Dr., D-45525 Hattingen (DE); Mutke, Stefan, D-91207 Lauf (DE)
(74) Vertreter: Meinke, Jochen

(56) Entgegenhaltungen:
- DE-A- 4 338 468
- GB-A- 729 060
- GB-A- 1 068 637
- US-A- 2 920 722

## Beschreibung

Die Erfindung betrifft ein Verfahren zur Nachstellung einer, insbesondere in Öl laufenden, Lamellenbremse, bei dem eine im Betriebzustand gegebene Verdrehsicherung an dem bzw. den das Lamellenpaket axial stützenden Bauteil bzw. Bauteilen neutralisiert wird, das gegenüber einem Hohlträger mittel- oder unmittelbar axial relativ bewegbare Bauteil in Richtung des Lamellenpaketes solange zugestellt wird, bis es dort unter Überwindung des innerhalb des Lamellenpaketes vorhandenen Axialspiels zur Anlage kommt und das Bauteil anschließend um einen vorgegebenen Drehwinkel zurückgestellt und die Verdrehsicherung des Bauteiles wiederhergestellt wird.

Die Erfindung betrifft darüber hinaus eine Einrichtung zur Durchführung eines solchen Verfahrens.

Ein Verfahren dieser Art ist aus US-A-29 20 722 bekannt. Dieses Verfahren eignet sich zur Nachstellung einer einfachen Fahrzeuglamellenbremse, die unmittelbar zwischen der Antriebsachse und dem Fahrzeugrad wirkt. Hinweise auf kompliziertere Bremsanordnungen, bei denen in die Achse eine Getriebeübersetzung integriert ist, sind dieser Druckschrift nicht zu entnehmen.

Die DE-A-43 38 468 betrifft ein Verfahren und eine Einrichtung zur Verschleißmessung an Lamellenbremsen, indem in eine vorgegebene Bohrung in der Radnabe eine eine Meßeinrichtung beinhaltende Schraube eingeführt wird. Die Meßeinrichtung weist eine konzentrisch innerhalb der Verstellschraube geführte Spindel auf, die nach dem Betätigen der Bremse ohne weitere Drehung der Radnabe bis zur die Lamellen abstützenden Scheibe zugestellt und dieser Abstand als erster Meßwert festgestellt wird. Anschließend wird die Bremse gelöst und die Spindel solange weiter zugestellt, bis sie erneut an der Stützscheibe zur Anlage kommt, wobei dieser Abstand als zweiter Meßwert ebenfalls festgestellt wird. Die Differenz der beiden Meßwerte ergibt den Kolbenhub, d.h. den Verschleiß der Reibbeläge.

Der GB-A-20 24 345 ist eine Scheibenbremse zu entnehmen, bei welcher der Verschleiß des Scheibenpaketes ohne Demontage der Bremse ermittelt werden kann. Im Bereich eines stirnseitig am Radgehäuse vorgesehenen Verschlußelementes wird eine Tiefenmeßlehre eingeführt, deren Meßeinrichtung bis zu einem vorgegebenen Bauteil innerhalb des Radgehäuses zugestellt wird. Durch Vergleich des Meßwertes mit einem vorgegebenen Grenzwert wird der Verschleiß ermittelt und somit festgestellt, inwieweit der Austausch des Lamellenpaketes von Nöten ist.

Beide vorgenannten Druckschriften befassen sich somit ausschließlich mit der Verschleißmessung, wobei festzustellen ist, daß durch die angegebenen Mittel eine Nachstellung der Lamellenbremse nicht möglich ist.

Durch die DE-A-39 32 719 ist eine Reibscheiben-Nachstellvorrichtung bekannt. Die Nachstellvorrichtung für hydraulisch betätigbare Mehrscheibenbremsen weist im Ringkolben mittels einer Befestigung gehalterte Haltebolzen auf. Die Bolzen greifen vom Kolben her mit radialem Spiel in eine glatte Bohrung der den Kolben auf der bremsenabgewandten Seite radial überdeckenden Gehäusezwischenwand hinein. Dort sind - geschützt vor Erwärmungs- und Verschmutzungseinflüssen aus der Bremse - axial innerhalb einer Umfangsnut des Mitnahmebolzens Klemmelemente an sich bekannter Art gegen die Innenwand der Bohrungen aufgespreizt. Die Breite der Nut ist um das Lüftspiel größer als die axiale Länge der Klemmelemente, wobei deren Klemmkraft verhindert, daß der Kolben nach Wegfall des Betätigungsdruckes durch die Rückstellfedern von der Anlagefläche um mehr als ein Soll-Lüftspiel bis zum Anschlag der Klemmelemente zurückgezogen wird. Das Soll-Lüftspiel ist wenigstens gleich oder wenig größer als die Summe aller Reibscheibendistanzen bei gelüfteter Bremse und entspricht nach seiner erstmaligen Justage dem Hub des Kolbens durch einfache Betätigung, unabhängig von der jeweiligen axialen Effektivlänge der zusammengedrückten Reibscheiben.

Bei dieser Lösung kann eine automatische Nachstellung der Reibscheiben durch die vorab angeführte Vorgehensweise herbeigeführt werden, die jedoch relativ bauaufwendig und somit kostenintensiv ist und nicht in jedem dafür vorgesehenen Anwendungsfall sinnvoll und notwendig ist.

Aufgabe der Erfindung ist es, ein Verfahren und eine Einrichtung zu schaffen, mittels welchen ein auf den Bedarfsfall abgestelltes Nachstellen von insbesondere in Öl laufenden, Lamellenbremsen möglich ist, um auf diese Art und Weise auf eine Forderung von Fahrzeugherstellern reagieren zu können.

Diese Aufgabe wird mit einem Verfahren der eingangs bezeichneten Art erfindungsgemäß dadurch gelöst, daß die Lamellenbremse in einer mit mindestens einem Planetenradvorgelege ausgerüsteten Achse angeordnet ist, und daß vor Neutralisierung der Verdrehsicherung ein in dem Planetenträger vorgesehenes Verschlußelement entfernt wird, daß im Anschluß an die Entfernung des Verschlußelementes, insbesondere nach dem Ablassen des Öles aus dem angehobenen Radkopf der Achse, der Planetenträger solange verdreht wird, bis ein Sicherungselement im Bereich des Bauteiles in der Öffnung für das Verschlußelement sicht bar ist, und daß nach der Wiederherstellung der Verdrehsicherung das Verschlußelement anschließend in den Planetenträger eingebracht wird.

Vorteilhafte Weiterbildungen des erfindungsgemäßen Verfahrens sind den zugehörigen Unteransorüchen zu entnehmen.

Eine Einrichtung zur Durchführung des Verfahrens ist dadurch gekennzeichnet, daß das Bauteil eine Stützscheibe mit einem Außengewinde ist, daß der sie umgebende Hohlradträger mit einem Innengewinde versehen ist, und daß die Verdrehsicherung der Stützscheibe gegenüber dem Hohlradträger mittel- oder unmittelbar durch eine Schraube herbeiführbar ist.

Eine alternative Einrichtung zur Durchführung des erfindungsgemäßen Verfahrens ist dadurch gekennzeichnet, daß das Bauteil aus zwei radial ineinander liegenden Ringen gebildet ist, von denen der eine gegenüber dem Hohlradträger verdrehsicher angeordnet ist, daß beide Ringe mit korrespondierenden Gewinden versehen sind und daß die Verdrehsicherung des einen Ringes gegenüber einem diesen axial abschließenden Sicherungsring mittel- oder unmittelbar durch eine Scnraube herbeiführbar ist.

Erfindungsgemäße Weiterbildungen der alternativen Einrichtungen sind den zugehörigen Unteransprüchen zu entnehmen.

Zum Zwecke der Nachstellung der Lamellenbremsen einer Achse wird das zugehörige Fahrzeug vorzugsweise aufgebockt, so daß die Räder, an denen die Bremse nachgestellt werden soll, frei drehbar sind. Bei sogenannten naßlaufenden Lamellenbremsen wird zunächst einmal das Öl aus dem zugehörigen Radkopf abgelassen. Das als Schraube ausgebildete Verschlußelement wird aus der Stirnseite des Planetenträgers entfernt. Der Planetenträger wird anschließend solange gedreht, bis das vorzugsweise ebenfalls als Schraube ausgebildete Sicherungselement in der Öffnung der Verschlußschraube erscheint. Die Sicherungsschraube ist hierbei dergestalt geformt, daß sie die Stützscheibe mittel- oder unmittelbar gegen Verdrehen sichert, wobei deren Entfernung mit einem geeigneten Werkzeug aus Radkopf vorgenommen wird. Anscnließend wird die vorzugsweise mit einer Durchgangsbohrung versehene Verschlußschraube wieder in den Planetenträger eingerührt und ein Metallstab wird durch die Durcngangsbohrung so weit hindurchgeführt, daß er die Verschlußschraube und die Stützscheibe formschlüssig miteinander verbindet.

Unabhängig von der Art und Ausbildung bzw. Anordnung der Sicherheitsschraube wird der Planetenträger nun soweit gedreht, bis die Stützscheibe, welche mit dem Hohlradträger über ein Gewinde verbunden ist, auf dem Lamellenpaket auftrifft. Anscnließend wird der Planetenträger um eine vorgegebene Anzahl von Umdrehungen (Drenwinkel) zurückgedreht. Die Anzahl der Umdrehungen multipliziert mit der Steigung des Gewindes entspricht hierbei dem neu einzustellenden Lüftspiel.

Anschließend werden die Verschlußschraube und der Metallstab wieder entfernt und die Sicherungsschraube in der zugehörigen Bohrung plaziert. Schließlich wird der Planetenträger mittels des Verschlußelementes wieder abgedichtet und bei einer naßlaufenden Lamellenbremse der Radkopf mit Öl gefüllt.

Durch die erfindungsgemäßen Merkmale wird ein einfaches und manuelles Nachstellverfahren sowie danach arbeitende alternative Einrichtungen konzipiert, die im Gegensatz zu automatischen Nachstellverfahren nur bei Bedarf aktiviert werden müssen, zumal der Verschleiß, insbesondere naßlaufender Lamellenbremsen, relativ gering ist und somit ein automatisches Nachstellverfahren mit den damit verbundenen aufwendigen konstruktiven und baulichen Gegebenheiten nicht notwendig erscheint.

Die Erfindung ist anhand eines Ausführungsbeispieles in der Zeichnung dargestellt und wird wie folgt beschrieben. Es zeigen:
- Figur 1 -: Seitenansicht eines Radkopfes mit naßlaufender Lamellenbremse
- Figur 2 -: Teildarstellung der Verdrensicherung der Stützscheibe gegenüber dem Hohlradträger gemäß Figur 1
- Figur 3 -: alternativer Radkopf zu Figur 1
- Figur 4 -: Teildarstellung einer ebenfalls alternativen Verdrehsicherung gemäß Figur 2
- Figur 5 -: alternativer Radkopf zu den Figuren 1 und 3
- Figur 6 -: Teildarstellung einer ebenfalls alternativen Verdrehsicherung gemäß Figur 5.

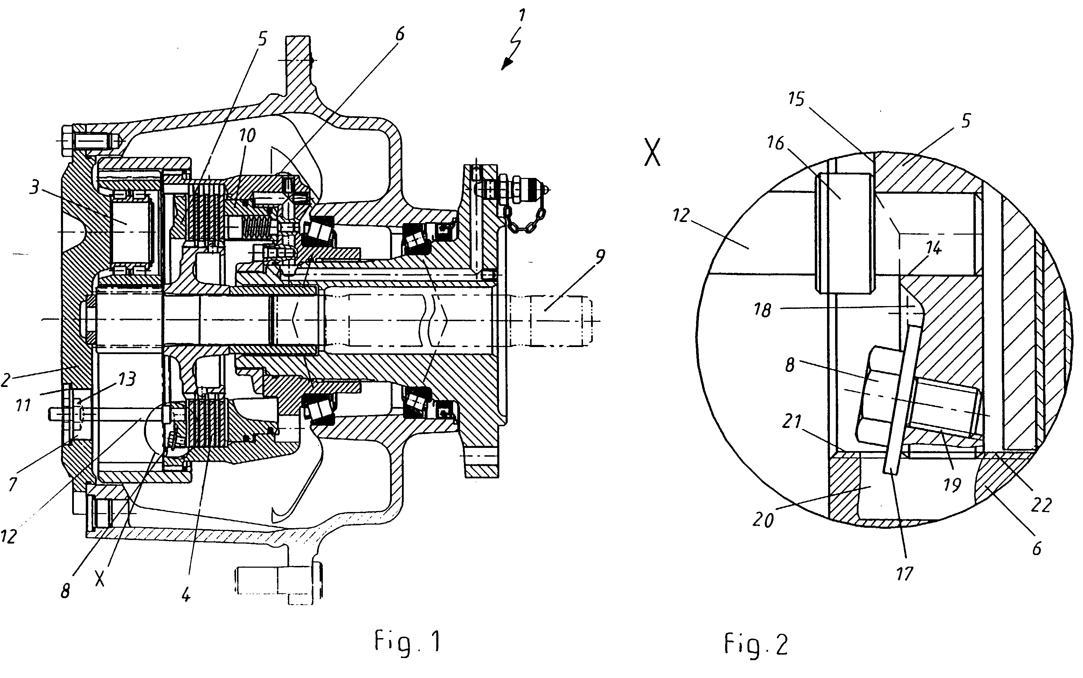

Figur 1 zeigt einen Radkopf 1 einer nicht weiter dargestellten Antriebsachse, die im wesentlichen folgende Bauteile beinhaltet:
einen Planetenträger 2, ein Planetenradvorgelege 3, eine als Lamellenpaket ausgebildete, in diesem Beispiel in Öl laufende, Lamellenbremse 4, eine Stützscheibe 5, einen das Lamellenpaket 4 und die Stützscheibe 5 übergreifenden Hohlradträger 6, eine im Planetenträger 2 stirnseitig eingebrachte Verschlußschraube 7 sowie eine als Verdrehsicherung wirkende Schraube 8 im Bereicn der Stützscheibe 5. Eine von einem nicht weiter dargestellten Differential der Achse abgezweigte Welle 9 treibt das Planetenradvorgelege 3. Die Lamellenbremse 4 wird im Betriebszustand durch einen mit Druckmittel beaufschlagbaren Kolben 10 axial gegen die im Betriebszustand verdrehgesicherte und somit stationäre Stützscheibe 5 zugestellt. Erfindungsgemäß ist die Lamellenbremse 4 nachstellbar ausgebildet, was im folgenden näher beschrieben wird:

Die Nachstellung der Lamellenbremse 4 erfolgt beispielsweise bei aufgebocktem Fanrzeug, so daß die nicht weiter dargestellten Räder, an denen die Bremse 4 nachgestellt werden soll, frei drehbar sind. Wie bereits dargelegt, wird in diesem Beispiel eine in Öl laufende Lamellenbremse 4 beschrieben, so daß vor dem eigentlichen Nachstellvorgang, beispielsweise durch Entfernen der Verschlußschraube 7 (oder einer beliebigen Ölablaßschraube im Bereich des Radkopfes 1), das Öl aus dem Radkopf 1 abgelassen wird. Der Planetenträger 2 wird daraufhin solange in Umfangsrichtung gedreht, bis die Sicherungsschraube 8 in der Öffnung 11 der Verschlußschraube 7 sichtbar wird. Mittels eines geeigneten Werkzeuges wird die Sicherungsschraube 8 durch die Öffnung 11 entfernt, so daß die Verdrehsicherung zwischen der Stützscheibe 5 und dem Hohlradträger 6 nunmehr neutralisiert ist. Die Stützscheibe 5 und der Hohlradträger 6 sind hierbei mit korrespondierenden Gewinden (siehe Figur 2) versehen. Im Anschluß daran wird die Verschlußschraube 7 wieder in die öffnung 11 eingebracht, wobei ein Metallstab 12 durch eine in der Verschlußschraube 7 vorgesehene Durchgangsbohrung 13 hindurchgeführt und formschlüssig mit der Stützscheibe 5 verbunden wird. Diese kann beispielsweise durch eine enge Bohrung oder aber eine Schraubverbindung realisiert werden. Nun wird der Planetenträger 2 in Umfangsrichtung gedreht, bis die Stützscheibe 5, die mit dem Hohlradträger 6 über das vorab angesprochene Gewinde verbunden ist, auf dem Lamellenpaket 4 bei Überwindung des in demselben vorhandenen Axialspieles auftrifft. Anscnließend wird der Planetenträger 2 um eine gewisse Zahl an Umdrehungen bzw. einen vorgegebenen Drehwinkel zurückgedreht. Die Anzahl der Umdrehungen multipliziert mit der Steigung des Gewindes entspricht dem erwünschten Lüftspiel. Nach Beendigung dieses Nachstellvorganges wird die Verschlußschraube 7 in Verbindung mit dem Metallstab 12 aus dem Radkopf 1 entnommen. Die Sicherungsschraube 8 wird mit dem bereits angesprochenen Werkzeug wieder in die zugehörige Bohrung eingesetzt und anscnließend wird der Planetenträger 2 verschlossen und der Radkopf 1 wieder mit Öl befüllt.

Figur 2 zeigt in vergrößerter Darstellung den Bereich X, d.h. den Bereich der Verdrehsicherung. Erkennbar sind folgende Bauteile:
die Stützscheibe 5, das Lamellenpaket 4, der Metallstab 12, der in einer Bohrung 14 in der Stirnfläche 15 der Stützscheibe 5 geführt ist. Zu diesem Zweck ist der Metallstab 12 mit einem Anschlag 16 ausgerüstet, der auf der Stirnfläche 15 zur Anlage kommt. Desweiteren erkennbar ist die Sicherungsschraube 8, die in diesem Beispiel mit einem Scheibenelement 17 zusammenwirkt. Die Sicherungsschraube 8 wird unter einem vorgegebenen Neigungswinkel in eine zugehörige in den abgesetzten Stirnflächenbereich 18 der Stützscheibe 5 eingebrachte Bohrung 19 eingesetzt, wobei das Scheibenelement 17 einerseits auf dem abgesetzten Bereich 18 der Stützscheibe 5 und andererseits in einer Nut 20 des Hohlradträgers 6 eingreift. Hier in der vergrößerten Darstellung ist nun auch das Außengewinde 21 der Stützscheibe 5 sowie das Innengewinde 22 des Hohlradträgers 6 erkennbar.

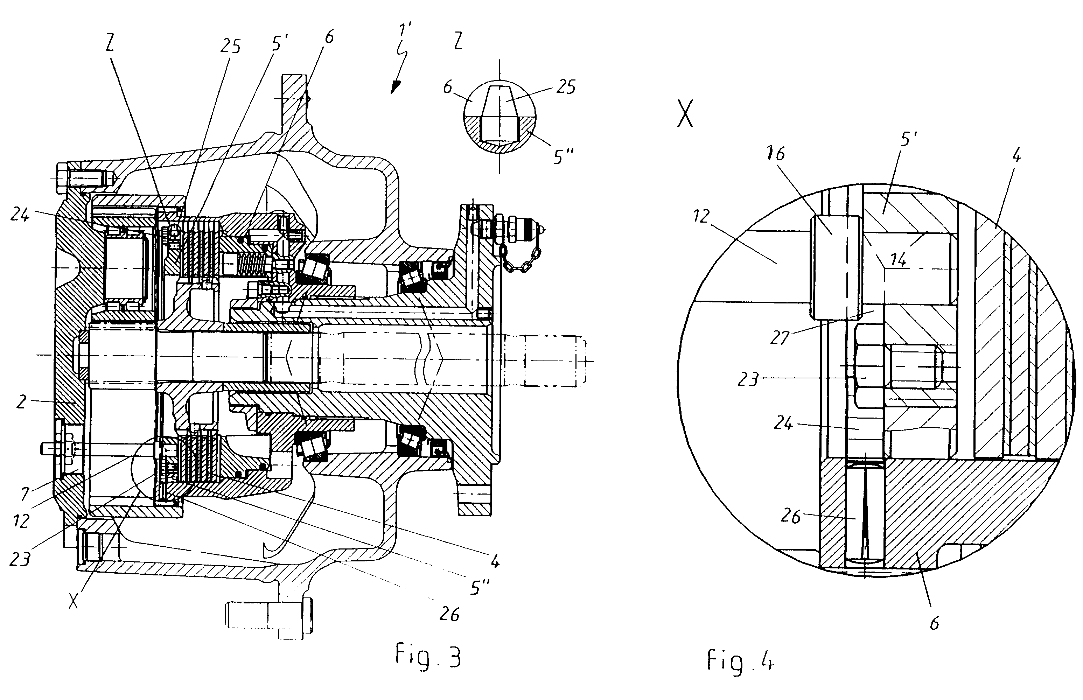

Figur 3 zeigt einen alternativen Radkopf 1', wobei gleiche Bauteile auch mit gleichen Bezugszeichen versehen sind. Unterschiede zwischen den Figuren 1 und 3 sind im wesentlichen im Bereich der Stützscheibe sowie der Verdrensicherung zwischen derselben und dem Hohlradträger 6 gegeben. Die Verdrehsicherung wird in diesem Beispiel durch eine achsparallel zur Welle 9 verlaufende Sicherungsschraube 23 bewirkt. Die Stützscheibe ist in diesem Beispiel aus zwei radial ineinander liegenden ringförmigen Bauteilen 5',5" gebildet, wobei diese Bauteile 5' und 5" mit korrespondierenden Gewinden (nicht dargestellt) versehen sind. Ein axial außerhalb des Bauteils 5' vorgesehener Sicherungsring 24 verhindert eine ungewollte Axialverschiebung der Bauteile 5',5" beim Betätigen der Bremse. Der äußere Ring 5" ist gegenüber dem Hohlradträger 6, der in diesem Beispiel kein Gewinde aufweist, durch eine Madenschraube 25 verdrehsicher geführt, während der Sicherungsring 24 gegenüber dem Hohlradträger mittels Metallstiften 26 verdrehsicher vorgesehen ist. Die Herstellung der formschlüssigen Verbindung zwischen dem Planetenträger 2 und der Stützscheibe erfolgt im wesentlichen analog zur Figur 1, nämlich durch die Verschlußschraube 7 in Verbindung mit dem Metallstab 12, der in diesem Beispiel am relativ zum äußeren Ring 5" bewegbaren inneren Ring 5' zur Anlage kommt. Im Anschluß an die Herstellung der formschlüssigen Verbindung der beiden Teile 2 und 5 wird der Planetenträger 2 gedreht. Dadurch bewegt sich der innere Ring 5' in Richtung des Lamellenpaketes 4. Nachdem der innere Ring 5' das Lamellenpaket 4 nach Überwindung des darin vorhandenen Axialspieles berührt hat, wird der Planetenträger 2 um die bereits angedeutete Anzahl Umdrehungen bzw. den vorgegebenen Drehwinkel zurückgedreht. Auch hier ergibt die Anzahl der Umdrehungen multipliziert mit der Steigung des Gewindes zwischen innerem 5' und äußerem Ring 5" das einzustellende Lüftspiel. Anschließend wird die Verschlußschraube 7 und der Metallstab 12 aus dem Radkopf 1' entnommen und die Sicherungsschraube 23 mittels des geeigneten Werkzeuges wieder an die dafür vorgesehene Stelle eingebracht. Dann wird der Radkopf 1' verschlossen und wieder mit Öl befüllt.

Die Ansichten X und Z sind vergrößert dargestellt, wobei in der Ansicht Z die Madenschraube 25 zwischen dem äußeren Ring 5" der Stützscheibe und dem Hohlradträger 6 bezeichnet ist.

In der Ansicht X gemäß Figur 4 sind folgende Bauteile erkennbar: der innere Ring 5' der Stützscheibe, der Hohlradträger 6, das Lamellenpaket 4, der Metallstab 12, der in einer Bohrung 14 des inneren Ringes 5' geführt und mit einem Anschlag 16 versehen ist. Ferner erkennbar ist die Sicherungsschraube 23 sowie der Metallstift 26 zur Fixierung des Sicherungsringes 24 gegenüber dem Hohlradträger 6, wobei die Sicherungsschraube 23 in einer Ausnenmung 27 des Sicherungsringes 24 eingreift und mit dem inneren Ring 5' der Stützscheibe verbindbar ist.

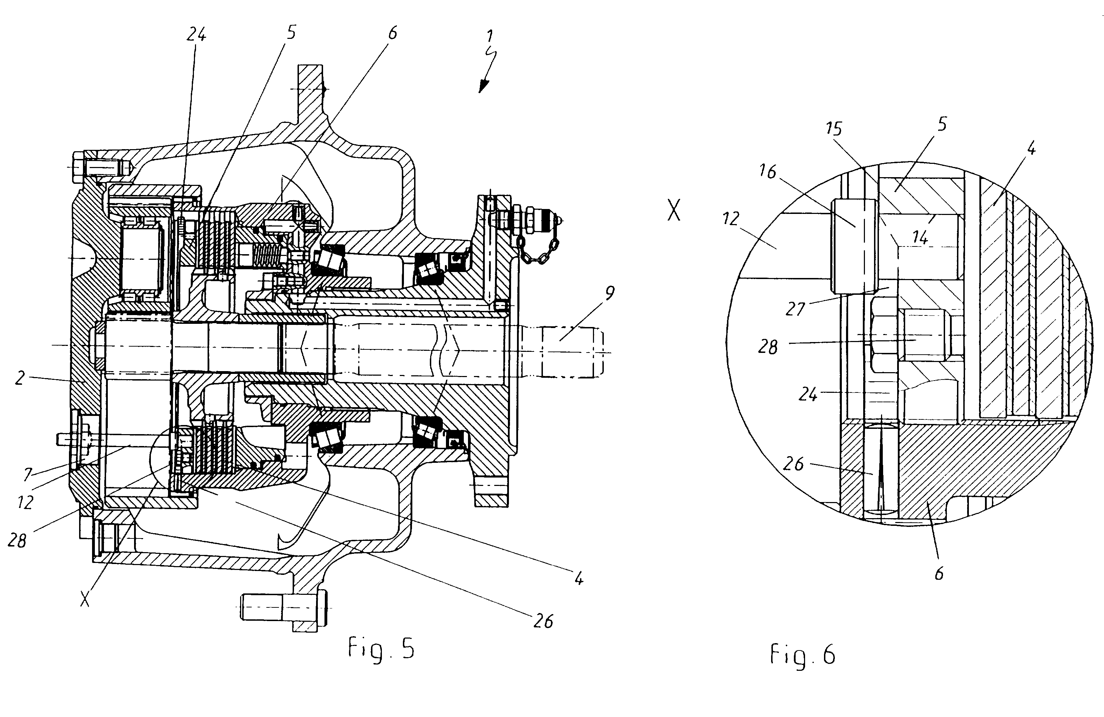

Figur 5 zeigt einen weiteren Radkopf 1", der im wesentlichen analog zu Figur 3 aufgebaut ist, so daß gleiche Bauteile mit gleichen Bezugszeichen versehen werden, wobei die Stützscheibe 5 analog zu Figur 1 wieder einteilig ausgebildet und mit einem Außengewinde (siehe Figur 6) versehen ist. Unterschiede zu Figur 3 sind im wesentlichen im konstruktiven Aufbau der Verdrehsicherung zu sehen. Bis zur Herstellung der formschlüssigen Verbindung der Teile 2 und 5 sind die Verfahrensschritte analog zu den bereits dargelegten durchzuführen. Die Stützscheibe 5 wird analog zu Figur 3 axial von einem Sicherungsring 24 gehalten, der durch Metallstifte 26 gegenüber dem Hohlradträger 6 verdrehsicher angeordnet ist. Nachdem die achsparallel zur Welle 9 verlaufende Sicherungsschraube 28 entfernt und die formschlüssige Verbindung zwischen Planetenträger 2 und Stützscheibe 5 mittels der Verschlußschraube 7 und dem Metallstab 12 hergestellt worden ist, wird der Planetenträger 2 gedreht, bis die Stützscheibe 5 das Lamellenpaket 4 unter Überwindung des darin vorhandenen Axialspieles berührt. Die Stützscheibe 5 ist mit dem Hohlradträger 6 über das bereits angesprochene Gewinde verbunden. Nun wird der Planetenträger 2 um eine bestimmte Anzahl von Umdrehungen bzw. über einen vorgegebenen Drehwinkel zurückgedreht. Die Anzahl der Umdrehungen multipliziert mit der Steigung des Gewindes zwischen Stützscneibe 5 und Hohlradträger 6 entspricht dem einzustellenden Lüftspiel. Anschließend wird die Verschlußschraube 7 und der Metallstab 12 aus dem Radkopf 1" entfernt. Dann wird die Sicherungsschraube 28 wieder in die Stützscheibe 5 eingesetzt, und zwar mit dem bereits angesprochenen geeigneten Werkzeug. Anschließend wird der Planetenträger 2 verschlossen und der Radkopf 1" wieder mit Öl befüllt.

Figur 6 zeigt eine Vergrößerung des mit X bezeichneten Verdrehsicherungsbereiches. Erkennbar sind folgende Bauteile:
die Stützscheibe 5, der Hohlradträger 6, das Lamellenpaket 4, der Metallstab 12, der in einer Bohrung 14 in der Stirnfläche 15 der Stützscheibe 5 eingebracht und mit einem Anschlag 16 versehen ist. Die Sicherungsschraube 28 ist in einer Ausnehmung 27 des Sicherungsringes 24 vorgesehen und ist mit der Stützscheibe 5 verschraubt.

## Patentansprüche

1. Verfahren zur Nachstellung einer insbesondere in Öl laufenden Lamellenbremse, bei dem eine im Betriebzustand gegebene Verdrehsicherung (X) an dem bzw. den das Lamel lenpaket (4) axial stützenden Bauteil (5) bzw. Bauteilen (5', 5") neutralisiert wird, das gegenüber einem Hohlträger (6) mittel- oder unmittelbar axial relativ bewegbare Bauteil (5, 5') in Richtung des Lamellenpaketes (4) solange zugestellt wird, bis es dort unter Überwindung des innerhalb des Lamellenpaketes (4) vorhandenen Axialspiels zur Anlage kommt und das Bauteil (5, 5') anschließend um einen vorgegebenen Drehwinkel zurückgestellt und die Verdrehsicherung (X) des Bauteiles (5) wiederhergestellt wird,
dadurch gekennzeichnet,
daß die Lamellenbremse in einer mit mindestens einem Planetenradvorgelege (3) ausgerüsteten Achse angeordnet ist, und daß vor Neutralisierung der Verdrehsicherung (X) ein in dem Planetenträger (2) vorgesehenes Verschlußelement (7) entfernt wird, daß im Anschluß an die Entfernung des Verschlußelementes (7), insbesondere nach dem Ablassen des Öles aus dem angehobenen Radkopf (1,1',1") der Achse, der Planetenträger (2) solange verdreht wird, bis ein Sicherungselement (8,23,28) im Bereicn des Bauteiles (5,5') in der Öffnung (11) für das Verscnlußelement (7) sichtbar wird, und daß nach der Wiederherstellung der Verdrehsicherung (X) das Verschlußelement (7) anschließend in den Planetenträger (2) eingebracht wird.

2. Verfahren nach Anspruch 1, dadurch gekennzeichnet, daß das Sicherungselement (8,23,28) mittels eines geeigneten Werkzeuges aus dem Bereich des Bauteiles (5,5') entfernt wird.

3. Verfahren nach den Ansprücnen 1 und 2, dadurch gekennzeichnet, daß zwischen dem Planetenträger (2) und dem Bauteil (5,5') im Anscnluß an die Entfernung des Sicherungselementes (8,23,28) eine formschlüssige Verbindung (12) hergestellt wird.

4. Einrichtung zur Durchführung des Verfahrens nach den Ansprüchen 1 bis 3, dadurch gekennzeichnet, daß das Bauteil (5) eine Stützscheibe mit einem Außengewinde (21) ist, daß der sie umgebende Hohlradträger (6) mit einem Innengewinde (22) versehen ist, und daß die Verdrehsicherung (X) der Stützscneibe (5) gegenüber dem Hohlradträger (6) mittel- oder unmittelbar durch eine Schraube (8,28) herbeiführbar ist.

5. Einrichtung zur Durchführung des Verfahrens nach den Ansprüchen 1 bis 3, dadurch gekennzeichnet, daß das Bauteil aus zwei radial ineinander liegenden Ringen (5',5") gebildet ist, von denen der eine (5") gegenüber dem Hohlradträger (6) verdrehsicher angeordnet ist, daß beide Ringe (5',5") mit korrespondierenden Gewinden versehen sind und daß die Verdrehsicherung (X) des einen Ringes (5') gegenüber einem diesen axial abschließenden Sicherungsring (24) mittel- oder unmittelbar durch eine Schraube (23) herbeiführbar ist.

6. Einrichtung nach Anspruch 4, dadurch gekennzeichnet, daß die Schraube (8) mit einem Radialansatz versehen ist bzw. mit einem Scheibenelement (17) zusammenwirkt, daß die Schraube (8) unter einem vorgegebenen Neigungswinkel in eine im äußeren Stirnflächenbereich (18) der Stützscheibe (5) vorgesehene Bohrung (19) eingebracht ist, und daß der Radialansatz bzw. das Scheibenelement (17) in einen korrespondierenden Bereich des Hohlradträgers (6), insbesondere in eine Nut (20) einbringbar ist.

7. Einrichtung nach Anspruch 5, dadurch gekennzeichnet, daß die Schraube (24,28) achsparallel zur Stützscheibe (5) in deren äußeren Stirnflächenbereich (15) eingebracht und in einer Ausnehmung (27) des Sicherungsringes (24) vorgesehen ist.

8. Einrichtung nach Anspruch 6, dadurch gekennzeichnet, daß die formschlüssige Verbindung durch einen in einer Passung radial sich erstreckenden Stift (26) herbeiführbar ist.

9. Einrichtung nach einem oder mehreren der Ansprüche 4 bis 8, dadurch gekennzeichnet, daß die formschlüssige Verbindung zwischen dem Planetenträger (2) und der Stützscheibe (5) durch einen sich zwischen beiden erstreckenden Stab (12) herbeiführbar ist.

10. Einrichtung nach Anspruch 9, dadurch gekennzeichnet, daß sich der Stab (12) durch eine in dem Verschlußelement (7) vorgesehene Durchgangsbohrung (13) hindurcherstreckt und in einer korrespondierenden Ausnehmung (14) im Bereich der Stirnfläche (15) der Stützscheibe (5) bzw. des Ringes (5') zumindest geführt wird.

11. Einrichtung nach einem oder mehreren der Ansprüche 4 bis 10, dadurch gekennzeichnet, daß das Lüftspiel des Lamellenpaketes (4) dadurch einstellbar ist, daß die Anzahl der Umdrehungen der Stützscheibe (5) bzw. des Ringes (5') bzw. ein vorgegebener Drehwinkel bei ihrer Zurückstellung mit der Gewindesteigung multipliziert wird.

## Claims

1. A method for adjusting in particular a multiple disc brake running in oil, in which securement against rotation (X) existing in the operating state at the component (5) or components (5', 5") supporting the disc assembly (4) is disabled, the component (5, 5') axially movable indirectly or directly relative to a hollow carrier (6) is advanced towards the disc assembly (4) until, having overcome the axial play existing within the disc assembly (4), it comes to into engagement therewith, and the component (5, 5') is subsequently returned through a given angle of rotation and securement (X) of the component against rotation is reinstated,
characterized in that
the multiple disc brake is arranged in an axle equipped with at least one planetary gear (3), and that, before securement against rotation (X) is disabled, a closure element (7) provided in the planet carrier (2) is removed, that following removal of the closure element (7), especially after the oil has been drained from the raised wheel head (1, 1', 1") of the axle, the planet carrier (2) is rotated until a locking element (8, 23, 28) in the region of the component (5, 5') becomes visible in the opening (11) for the closure element (7), and that after securement against rotation (X) has been reinstated, the closure element (7) is subsequently introduced into the planet carrier (2).

2. A method according to claim 1, characterized in that the locking element (8, 23, 28) is removed by means of a suitable tool from the region of the component (5, 5').

3. A method according to claims 1 and 2, characterized in that a positive connection (12) is produced between the planet carrier (2) and the component (5, 5') following removal of the locking element (8, 23, 28).

4. An arrangement for implementing the method according to claims 1 to 3, characterized in that the component (5) is a supporting plate with an external thread (21), that the ring gear carrier (6) surrounding it is provided with an internal thread (22), and securement (X) of the supporting plate against rotation relative to the ring gear carrier (6) is effected indirectly or directly by a screw (8, 28).

5. An arrangement for implementing the method according to claims 1 to 3, characterized in that the component is formed from two rings (5', 5") lying radially one within the other, of which one (5") is arranged so that it does not rotate relative to the ring gear carrier (6), that both rings (5', 5,") are provided with corresponding threads and that securement (X) of the one ring (5') against rotation relative to a locking ring (24) that limits axial movement of this ring can be effected indirectly or directly by a screw (23).

6. An arrangement according to claim 4, characterized in that the screw (8) is provided with a radial extension or co-operates with a washer element (17), the screw (8) is introduced at a predetermined angle of inclination into a bore (19) provided in the outer end face region (18) of the supporting plate (5), and the radial extension or the washer element (17) is arranged to be introduced into a corresponding region of the ring gear carrier (6), especially into a recess (20).

7. An arrangement according to claim 5, characterized in that the screw (24, 28) is introduced axially parallel to the supporting plate (5) in the outer end face region (15) thereof and is provided in a recess (27) of the locking ring (24).

8. An arrangement according to claim 6, characterized in that the positive connection is effected by a pin (26) extending radially to effect the fit.

9. An arrangement according to one or more of clams 4 to 8, characterized in that the positive connection between the planet carrier (2) and the supporting plate (5) is arranged to be effected by a rod (12) extending between the two.

10. An arrangement according to claim 9, characterized in that the rod (12) extends right through a through-bore (13) provided in the closure element (7) and is at least guided in a corresponding recess (14) in the region of the end face (15) of the supporting plate (5) or the ring (5').

11. An arrangement according to one or more of claims 4 to 10, characterized in that the air clearance of the disc assembly (4) is adjustable by multiplying the number of rotations of the supporting plate (5) or the ring (5'), or a given angle of rotation as it is reset, by the lead of the thread.

## Revendications

1. Procédé de réglage d'un frein à disques multiples, fonctionnant dans l'huile en particulier, dans lequel on neutralise un système de blocage de rotation (X), actif à l'état de service, au niveau de la pièce (5) ou des pièces (5', 5") constituant un appui axial pour le paquet de disques (4), laquelle pièce, qui peut se déplacer directement ou indirectement dans le sens axial par rapport à un support de couronne de train planétaire (6), est avancée en direction du paquet de disques (4) jusqu'à ce qu'elle y vienne en appui en surmontant le jeu axial existant à l'intérieur du paquet de disques (4) et, ensuite, on fait tourner en arrière ladite pièce (5, 5') selon un angle de rotation prédéfini et le système de blocage de rotation (X) de la pièce (5) est à nouveau rétabli, caractérisé en ce que le frein à disques multiples est disposé sur un axe équipé d'au moins un engrenage à roues planétaires (3), et en ce que, avant la neutralisation du système de blocage de rotation (X), on retire un élément de fermeture (7) prévu dans le porte-pignons satellites (2), en ce que, lorsque l'élément de fermeture (7) a été retiré, en particulier lorsque l'huile a été évacuée hors de la tête de roue (1, 1', 1") de l'essieu monté sur pont, on fait tourner le porte-pignons satellites (2) jusqu'à ce qu'un élément de blocage (8, 23, 28) soit visible dans la pièce (5, 5') à travers le trou (11) réservé à l'élément de fermeture (7), et en ce que, lorsque le système de blocage de rotation (X) a été rétabli, l'élément de fermeture (7) est introduit ensuite dans le porte-pignons satellites (2).

2. Procédé selon la revendication 1, caractérisé en ce que l'élément de blocage (8, 23, 28) est retiré de la zone de la pièce (5, 5') à l'aide d'un outil approprié.

3. Procédé selon les revendications 1 et 2, caractérisé en ce qu'un assemblage par conjugaison de forme (12) est réalisé entre le porte-pignons satellites (2) et la pièce (5, 5') une fois que l'élément de sécurité (8, 23, 28) a été retiré.

4. Dispositif destiné à la mise en oeuvre du procédé selon l'une quelconque des revendications 1 à 3, caractérisé en ce que la pièce (5) est une rondelle pour bague de frein munie d'un filet extérieur (21), en ce que le support de couronne de train planétaire (6) qui l'entoure est muni d'un filet intérieur (22), et en ce que le système de blocage de rotation (X) de la rondelle pour bague de frein (5) par rapport au support de couronne de train planétaire (6) est réalisé directement ou indirectement par une vis (8, 28).

5. Dispositif destiné à la mise en oeuvre du procédé selon l'une quelconque des revendications 1 à 3, caractérisé en ce que la pièce est formée par deux bagues (5', 5") disposées l'une dans l'autre dans le sens radial, parmi lesquelles l'une (5") est disposée de manière à ne pas tourner par rapport au support de couronne de train planétaire (6), en ce que les deux bagues (5', 5") sont munies de filets correspondants et en ce que le système de blocage de rotation (X) de l'une des bagues (5') par rapport à une bague de blocage (24) fermant celle-ci dans le sens axial est réalisé directement ou indirectement par une vis (23).

6. Dispositif selon la revendication 4, caractérisé en ce que la vis (8) est munie d'une saillie radiale ou agit conjointement avec un élément de plaquette (17), en ce que la vis (8) est insérée selon un angle d'inclinaison donné dans un trou (19) correspondant réalisé dans la partie extérieure (18) de la face frontale de la rondelle pour bague de frein (5), et en ce que la saillie radiale ou l'élément de plaquette (17) peut être engagé dans une zone correspondante du support de couronne de train planétaire (6), en particulier, dans une rainure (20).

7. Dispositif selon la revendication 5, caractérisé en ce que la vis (24, 28) est introduite parallèlement à l'axe de la rondelle pour bague de frein (5) dans la partie extérieure de la face frontale (15) de celle-ci et dans un évidement (27) de la bague de blocage (24).

8. Dispositif selon la revendication 6, caractérisé en ce que l'assemblage par conjugaison de forme peut être réalisé par une tige (26) qui s'étend dans le sens radial à travers un passage.

9. Dispositif selon l'une quelconque des revendications 4 à 8, caractérisé en ce que l'assemblage par conjugaison de forme entre le porte-pignons satellites (2) et la rondelle pour bague de frein (5) peut être réalisé par une tige (12) qui s'étend entre ces deux.

10. Dispositif selon la revendication 9, caractérisé en ce que la tige (12) passe à travers un trou de passage (13) prévu dans l'élément de fermeture (7) et est au moins guidé dans un évidement (14) correspondant dans la zone de la face frontale (15) de la rondelle pour bague de frein (5) ou de la bague (5').

11. Dispositif selon l'une quelconque des revendications 4 à 10, caractérisé en ce que le jeu de ventilation dans le paquet de disques (4) peut être réglé par le fait que le nombre de tours exécuté par la rondelle pour bague de frein (5) ou par la bague (5') ou l'angle de rotation prédéfini est multiplié par le pas de vis lorsque ladite rondelle effectue une rotation en arrière.
